# FASCICULE DE BREVET EUROPEEN

(11) **EP 0 785 380 B1**
(45) Date de publication et mention de la délivrance du brevet: **10.05.2000**
(21) Numéro de dépôt: 96402735.3
(22) Date de dépôt: 13.12.1996
(51) Int. Cl.: F16H 59/10, F16H 61/22

(54) **Véhicule automobile à boîte de vitesses automatique équipé d'une logique de commande à fonction de verrouillage du levier de vitesses en position parking et fonction de verrouillage de la clef contact**
Kraftfahrzeug mit automatischem Getriebe versehen mit einer Steuerlogik für die Funktionen Schaltsperre und Zündschlüsselabziehsperre
Automotive vehicle with automatic gear box equipped with a control logic for the "shift-lock" function and the "key-lock" function

(30) Priorité: 19.01.1996 FR 9600622
(43) Date de publication de la demande: 23.07.1997
(73) Titulaire: AUTOMOBILES PEUGEOT, 75116 Paris (FR); AUTOMOBILES CITROEN, 92200 Neuilly-sur-Seine (FR)
(72) Inventeur: Durieux, Jean-Marc, 25200 Montbeliard (FR); Sauvyre, Stéphane, 25200 Montbeliard (FR)
(74) Mandataire: Thinat, Michel

(56) Documents cités:
- EP-A- 0 378 244
- US-A- 5 096 033

## Description

La présente invention concerne un véhicule automobile à boîte de vitesses automatique équipé d'une logique de commande à fonction de verrouillage du levier de vitesses en position parking P ou fonction "shift-lock" et à fonction de verrouillage de la clef de contact ou fonction "key-lock".

Les législations de certains pays exigent que les véhicules automobiles à boîte de vitesses automatique soient munis des fonctions de sécurité "shift-lock" et/ou "key-lock".

Selon la fonction "shift-lock", au démarrage du véhicule automobile, on ne peut sortir le levier de la boîte de vitesses de la position P (parking) que si le conducteur appuie sur la pédale de frein et si la clef est tournée pour mettre le contact.

Selon la fonction "key-lock", à l'arrêt du véhicule, la clef de contact ne peut être extraite que si le levier est ramené en position P.

EP-A-0 378 244 décrit un véhicule automobile à boite de vitesses automatique comprenant les caractéristiques énoncées dans le préambule de la revendication 1.

L'invention propose une logique de commande s'appliquant en particulier à une boîte de vitesses automatique équipée d'une commande électronique et permettant une plus grande sécurité et une plus grande facilité d'emploi tout en respectant les règlements législatifs.

A cet effet, le véhicule automobile comprend les caractéristiques de la partie caractérisante de la revendication 1.

Le deuxième actionneur de déverrouillage de la clef de contact est commandé lorsqu'un des capteurs précités fournit un signal indiquant que le levier est amené en position P avant ou après que l'autre capteur fournisse un signal de coupure de contact.

Selon un autre mode de fonctionnement, le deuxième actionneur de déverrouillage de la clef de contact est commandé pendant une durée prédéterminée, par exemple une minute, et après écoulement de cette durée, suite à un bref retour de la clef en position "après contact" + APC, le deuxième actionneur est commandé instantanément.

Le deuxième actionneur de déverrouillage de la clef de contact est commandé lorque l'un des capteurs précités fournit un signal indiquant un déplacement de la clef de contact de sa position + APC à sa position de coupure du contact et l'autre capteur fournit un signal indiquant que le levier est amené en position P.

Le deuxième actionneur de déverrouillage de la clef de contact est commandé à partir du front montant du signal de l'autre capteur précité.

Dans le cas où le calculateur de la logique de commande ne possède pas d'entrée "accessoires" + ACC de la clef de contact, ce calculateur surveille le capteur de l'état de la position du levier pendant une durée limitée prédéterminée et si le retour du levier en position P intervient après la fin de cette durée prédéterminée, un bref retour de la clef en position "après contact" +APC permet de commander le deuxième actionneur (10) de déverrouillage de la clef.

La logique de commande est également agencée pour commander instantanément l'actionneur de déverrouillage du levier si ce dernier passe en position P alors que la clef de contact est en position "après contact" +APC ou "Accessoires" + ACC et qu'un appui est exercé sur la pédale de frein.

Le premier actionneur électromagnétique de déverrouillage du levier de la position P est commandé lorsque le levier est en position P, la clef de contact est en position "après contact" +APC ou "Accessoires"+ACC et le véhicule se déplace à une vitesse supérieure à une valeur minimale, par exemple d'environ 3 km/h.

Le deuxième actionneur de déverrouillage de la clef de contact est commandé lorsque l'un des capteurs précités fournit un signal indiquant que le levier est en position P et l'autre capteur fournit un signal indiquant un déplacement de la clef de contact de sa position "après contact" +APC à sa position de coupure du contact.

Le deuxième actionneur de déverrouillage de la clef de contact est commandé à partir du front descendant du signal de l'autre capteur précité.

Le premier actionneur de déverrouillage du levier de la position P n'est commandé qu'après écoulement d'une temporisation déterminée, par exemple de 5 secondes, si la pédale de frein est maintenue appuyée lors du passage du levier en position P.

La logique de commande est également adaptée pour commander l'actionneur précité avant la fin de la temporisation en lâchant la pédale de frein et en appuyant à nouveau sur celle-ci.

Un calculateur électronique est utilisé pour la fonction "shift-lock" pour diagnostiquer une défaillance de l'un des capteurs de position du levier en position P, de détection d'appui sur la pédale de frein, de vitesse du véhicule ou de position de la clef de contact et empêcher la commande du premier actionneur de déverrouillage du levier en cas de défaillance d'un capteur diagnostiquée par le calculateur de sorte que le conducteur peut avoir recours à une fonction de secours dite "release" permettant, par un outil ou une clef, de deverrouiller manuellement le levier de la position P.

Un calculateur électronique est également utilisé pour la fonction "key-lock" pour diagnostiquer une défaillance de l'un des capteurs de détection de position du levier en position P ou de position de la clef de contact et si le calculateur détecte une défaillance de l'un des capteurs en l'absence d'une fonction de secours dite "release" permettant, par un outil ou une clef, de déverrouiller manuellement la clef de contact, le deuxième actionneur de déverrouillage de la clef de contact est commandé en ne tenant compte que du seul capteur en état de fonctionnement.

Le véhicule comprend également un moyen de signalisation émettant un signal sonore lorsque la porte du conducteur est ouverte alors que le levier n'est pas en position P.

De préférence, la boîte de vitesses est équipée d'une commande électronique.

L'invention sera mieux comprise et d'autres buts, caractéristiques, détails et avantages de celle-ci apparaîtront plus clairement au cours de la description explicative qui va suivre faite en référence aux dessins schématiques annexés relative à un système de verrouillage connu permettant d'assurer les deux fonctions de sécurité "shif-lock" et "key-lock" perfectionnées par l'invention, et dans lesquels :

La figure 1 représente un exemple d'un système de verrouillage connu pour assurer les deux fonctions "shif-lock" et "key-lock" équipant les véhicules automobiles à boîte de vitesses automatique, de préférence à commande électronique.

La figure 2 représente les différentes positions possibles de la clef de contact.

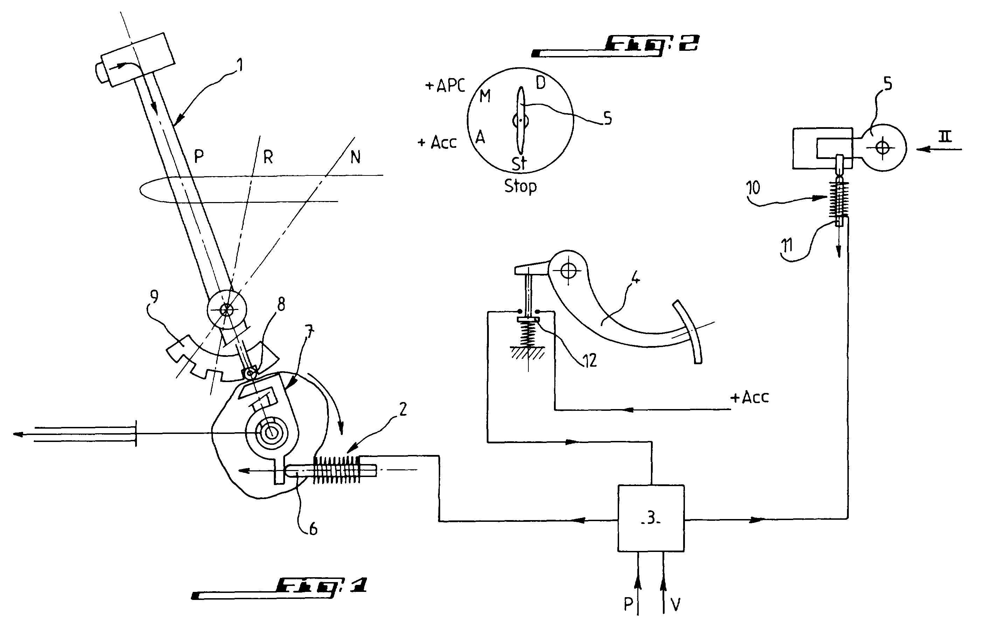

Pour assurer la fonction de verrouillage du levier de vitesse 1 en position parking "P" représentée à la figure 1, ou fonction "shift-lock", ce système comprend un actionneur électromagnétique 2 commandé par un boîtier électronique 3 pour déverrouiller le levier 1 de la position P lorsqu'un appui est exercé sur la pédale de frein 4 du véhicule et que la clef de contact 5 est en position M (ou position après contact + APC) ou en position A (ou position accessoires + ACC permettant de mettre sous tension des accessoires consommant peu de courant, tels qu'un poste de radio, lorsque le moteur est arrêté). L'actionneur électromagnétique 2 comprend une tige électroaimant 6 agissant sur un mécanisme 7 pour permettre de déloger un embout de verrouillage 8 d'un trou de verrouillage correspondant d'un secteur angulaire 9 fixe par rapport au levier de vitesses 1.

Pour assurer la fonction de verrouillage de la clef de contact 5 ou fonction "key-lock" lorsque le levier de vitesses 1 n'est pas en position P, le système comprend un actionneur électromagnétique 10 commandé par le boîtier électronique 3 pour déverrouiller la clef de contact 5 lorsque le levier 1 est en position P. La tige d'électroaimant 11 de l'actionneur 10 bloque en rotation le barillet lorsque le levier 1 n'est pas en position P de sorte que la clef 5 ne peut pas passer de la position "+ ACC" à la position "stop" pour autoriser le retrait de la clef 5. Ainsi, lorsque l'actionneur 10 est alimenté par le boîtier 3, la clef peut être déverrouillée ou retirée et si l'actionneur 10 n'est pas alimenté, la clef est verrouillée.

La fonction "shift-lock" permet de s'assurer de la présence d'un conducteur, par l'appui sur la pédale de frein 4, avant d'autoriser l'entraînement du véhicule par le moteur et d'éviter le démarrage brutal du véhicule à l'engagement de la vitesse.

La fonction "key-lock" empêche l'extraction de la clef de contact 5 du véhicule si le levier 1 n'est pas en position P. Elle permet d'éviter les risques de blocage du volant par l'antivol lorsque le véhicule est en mouvement et de compléter la fonction "shift-lock" en incitant le conducteur à ne quitter son véhicule que si le levier 1 est en position P.

Le véhicule est également équipé d'une fonction d'interdiction de mise en marche du moteur si le levier 1 n'est pas en position P ou en position N (neutre). Elle permet d'éviter d'éventuels à-coups sur la transmission du véhicule au démarrage du moteur, ainsi que des déplacements intempestifs du véhicule.

Conformément à l'invention, une logique de commande, située par exemple dans le boîtier électronique 3, est prévue pour commander l'actionneur électromagnétique 2 dans les deux cas suivants.

Le premier cas concerne d'une manière générale le déverrouillage normal du levier 1 de la position P, c'est-à-dire que le déverrouillage est réalisé à l'aide de l'actionneur électromagnétique 2 lorsque le levier est en position P, que la clef de contact 5 est en position + APC ou + ACC et qu'un appui est maintenu sur la pédale de frein 4 du véhicule. L'appui sur la pédale de frein 4 est détecté par le contacteur de feu stop arrière 12, dont l'information est transmise au boîtier électronique 3. Afin d'éviter des commandes inutiles, la logique de commande est agencée pour ne pas commander ou alimenter instantanément l'actionneur électromagnétique 2 si le levier 1 passe en position P après que la clef de contact 5 est en position + APC ou + ACC et qu'un appui sur la pédale de frein 4 est exercé. Dans ce cas, qui correspond à la configuration normale d'arrêt du véhicule, une temporisation, par exemple de 5 secondes, est lancée et l'actionneur électromagnétique 2 n'est commandé ou alimenté qu'après écoulement de la temporisation si le conducteur maintient l'appui sur la pédale de frein 4. La logique de commande peut être adaptée pour commander l'actionneur électromagnétique 2 avant la fin de cette temporisation en lâchant la pédale de frein 4 et en appuyant à nouveau sur celle-ci. Dans tous les autres cas, c'est-à-dire avec un ordre d'arrivée des informations relatives à la position du levier en position P, la position de la clef en + APC ou + ACC et l'appui sur la pédale de frein 4, différent de celui ci-dessus, l'alimentation ou la commande de l'actionneur 2 est instantanée.

Le deuxième cas de déverrouillage du levier 1 de la position P par l'actionneur 2 se produit lorsque le levier 1 est en position P, la clef de contact 5 est en position +APC ou +ACC et le véhicule se déplace à une vitesse V supérieure à une valeur minimale, par exemple d'environ 3 km/h. Un tel cas peut se produire par exemple lorsque le véhicule roule et que le conducteur amène accidentellement le levier 1 en position P.

La commande de l'actionneur 2 est interrompue lorsque la clef de contact 5 quitte la position + ACC ou que le levier 1 quitte la position P ou que l'appui sur la pédale de frein 4 est lâché.

Deux cas particuliers concernant la logique de commande de l'actionneur 2 doivent être mentionnés.

Le premier cas particulier concerne le fait que l'actionneur 2 peut ne pas supporter une alimentation permanente. Dans ce cas, il est toléré de limiter la commande de l'actionneur 2 à une durée prédéterminée, par exemple d'une minute en respectant la condition suivante : après écoulement de cette durée, suite à un bref lâcher de la pédale de frein 4, l'actionneur 2 est commandé instantanément par le boîtier électronique 3 et doit être opérationnel (l'effort développé doit être suffisant pour déverrouiller le levier).

Le deuxième cas particulier concerne la boîte de vitesses automatique hydraulique sans commande électronique. Pour des raisons de simplification, il est toléré de ne pas gérer les fonctions suivantes mentionnées dans les deux cas ci-dessus de commande de l'actionneur 2 : non commande de l'actionneur 2 au retour du levier 1 en position P avec la pédale de frein 4 appuyée et inhibition du verrouillage du levier 1 lorsque le véhicule est en mouvement.

La logique de commande autorise des modes dégradés de fonctionnement comme suit. Si la fonction "shift-lock" utilise un calculateur électronique capable de diagnostiquer une défaillance de l'un des capteurs de détection de la position du levier 1, d'appui sur la pédale de frein 4, de vitesse du véhicule supérieure ou égale à 3 km/h ou de position de la clef de contact 5, et si le calculateur a diagnostiqué une telle défaillance, la commande de l'actionneur 2 doit être électriquement interdite. Dans un tel cas de figure, on devra alors avoir recours à la fonction de secours appelée "release". Cette fonction permet, grâce à un outil ou une clef, de déverrouiller manuellement le levier de la position P.

La logique de commande est également adaptée pour commander l'actionneur 10 de déverrouillage de la clef de contact 5 à partir de capteurs sensibles à la position du levier 1 et de la clef de contact 5 ou au mouvement de l'un d'eux, l'autre étant dans une position donnée.

Ainsi, cette logique de commande est adaptée pour commander l'actionneur 10 dans les trois cas suivants.

Le premier cas de commande de l'actionneur 10 de déverrouillage de la clef de contact 5 est celui où l'un de ces capteurs fournit un signal indiquant que le levier 1 est en position P et l'autre capteur fournit un signal indiquant un déplacement de la clef de contact 5 de sa position + APC à sa position de coupure d'alimentation du moteur du véhicule. Dans ce cas, l'actionneur 10 est alimenté à partir du front descendant du signal du capteur de position de la clef 5.

Le deuxième cas de commande de l'actionneur 10 est celui où le capteur de position du levier 1 fournit un signal indiquant que ce levier est amené en position P avant ou après que le capteur de position de la clef 5 fournisse un signal de coupure du contact (donc indépendamment de la position de la clef).

Le troisième cas de commande de l'actionneur 10 pour déverrouiller la clef 5 est celui où on coupe d'abord le contact d'alimentation du moteur et on amène le levier 1 en position P. Dans ce cas, l'actionneur 10 est alimenté à partir d'un front montant du signal du capteur de la position P du levier 1. Il est possible de limiter le temps de surveillance de l'état du capteur de la position P du levier comme on le verra par l'un des cas particuliers ci-dessous.

La commande de l'actionneur 10 est interrompue lorsque la clef de contact 5 quitte sa position + ACC ou que le levier 1 quitte sa position P. L'interruption de l'alimentation de l'actionneur 10 peut également s'effectuer après une temporisation comme expliqué ci-dessous dans un premier cas particulier de commande de l'actionneur 10.

Ce premier cas particulier concerne le fait que l'actionneur 10, tout comme l'actionneur 2, peut ne pas supporter une alimentation permanente. Il est alors toléré de limiter le temps d'alimentation de l'actionneur 10 à une durée déterminée,fixée par exemple à une minute, et en respectant la condition suivante : après écoulement de cette durée, suite à un bref retour de la clef de contact 5 en position +APC, et à condition que le levier soit en P, l'actionneur 10 doit être commandé instantanément et celui-ci doit être opérationnel (l'effort développé doit être suffisant pour assurer le déverrouillage).

Un deuxième cas particulier de commande de l'actionneur 10 est celui où le calculateur associé à la logique de commande de l'actionneur 10 ne possède pas l'entrée + ACC, c'est-à-dire qu'il ne reçoit pas d'information provenant de la borne de contact + ACC de la serrure de la clef de contact 5. Dans ce cas, il est toléré de limiter le temps de surveillance de l'état de la position P à une durée qui est à définir au cas par cas. Cette limitation n'est nécessaire que si le courant consommé par le calculateur lors de la surveillance de l'état de la position P n'est pas acceptable en permanence pour la batterie du véhicule. Si le retour du levier en position P intervient après cette durée, le conducteur devra amener brièvement la clef de contact 5 en position + APC pour fournir au boîtier électronique 3 une impulsion de commande avant de pouvoir déverrouiller la clef 5.

Un troisième cas particulier de commande de l'actionneur 10 concerne la boîte de vitesses automatique sans commande électronique de l'actionneur de déverrouillage de la clef de contact. Dans ce cas, l'actionneur 10 est alimenté avec la clef 5 en position + ACC et le levier 1 en position P avec éventuellement une temporisation comme dans le premier cas particulier.

La logique de commande de l'actionneur 10 permet également des modes dégradés comme suit. Si la fonction "key-lock" utilise un calculateur capable de diagnostiquer une défaillance de l'un ou l'autre des deux capteurs de position du levier 1 et de la clef de contact 5, deux cas se présentent : s'il n'y a pas de fonction "release", la logique de commande ne tient compte que du seul capteur en état de fonctionnement pour alimenter l'actionneur 10 (par exemple si le calculateur détecte un problème au niveau de la détection de la position de la clef de contact 5, l'actionneur 10 sera alimenté dès que le levier 1 sera en position P) ; s'il y a une fonction "release", l'alimentation de l'actionneur 10 n'est pas obligatoire. La fonction "release" permet, grâce à un outil ou une clef, de déverrouiller manuellement la clef.

Le véhicule peut également être équipé d'une fonction d'avertissement d'oubli de retour du levier 1 en position P. A cet effet, un moyen avertisseur émet un signal sonore si la porte du conducteur est ouverte avec le levier 1 dans une position autre que la position P. Cette fonction complète la fonction "shift-lock" en incitant le conducteur à ne pas quitter le véhicule avec le levier dans une position autre que la position P, par exemple la position neutre N avec le moteur du véhicule tournant.

La logique de commande de l'invention ci-dessus décrite permet une plus grande sécurité et une plus grande facilité d'emploi tout en respectant les règlements législatifs.

## Revendications

1. Véhicule automobile à boîte de vitesses automatique équipé d'une logique de commande à fonction de verrouillage du levier de vitesses (1) en position parking P ou fonction "shift-lock" par un premier actionneur électromagnétique (2) commandé pendant une durée prédéterminée, par exemple une minute, pour déverrouiller le levier (1) de la position P lorsqu'un appui est exercé sur la pédale de frein (4) du véhicule et que la clef de contact (5) est en position "après contact" (+ APC) ou "accessoires" (+ ACC), le premier actionneur (2) étant à nouveau actionné lorsqu'on relâche la pédale de frein (4) et qu'on l'enfonce à nouveau, et après écoulement de la durée d'actionnement du premier actionneur (2), suite à un bref lâcher de la pédale de frein (4), le premier actionneur (2) est commandé instantanément caractérisé en ce que la logique de commande possède également une fonction de verrouillage de la clef de contact (5) ou fonction "key-lock", si le levier (1) n'est pas en position P, par un deuxième actionneur électromagnétique (10) commandé pour déverrouiller la clef de contact (5) et en ce que la logique de commande est de plus agencée pour commander le deuxième actionneur (10) de déverrouillage de la clef de contact (5) à partir de capteurs sensibles à la position du levier (1) et de la clef de contact (5) ou au mouvement de l'un d'eux, l'autre étant dans une position donnée et au moins lorsque l'un des capteurs indique que le levier (1) se trouve ou est amené en position P.

2. Véhicule selon la revendication 1, caractérisé en ce que le deuxième actionneur (10) de déverrouillage de la clef de contact (5) est commandé lorsque l'un des capteurs précités fournit un signal indiquant que le levier (1) est amené en position P avant ou après que l'autre capteur fournisse un signal de coupure du contact.

3. Véhicule selon la revendication 1 ou 2, caractérisé en ce que le deuxième actionneur (10) de déverrouillage de la clef de contact (5) est commandé pendant une durée prédéterminée, par exemple une minute, et après écoulement de cette durée, suite à un bref retour de la clef en position "après contact" (+APC), le deuxième actionneur (10) est commandé instantanément.

4. Véhicule selon la revendication 1, caractérisé en ce que le deuxième actionneur (10) de déverrouillage de la clef de contact (5) est commandé lorsque l'un des capteurs précités fournit un signal indiquant un déplacement de la clef de contact (5) de sa position "après contact" (+APC) à sa position de coupure du contact et l'autre capteur fournit un signal indiquant que le levier (1) est amené en position P.

5. Véhicule selon la revendication 4, caractérisé en ce que le deuxième actionneur (10) de déverrouillage de la clef de contact (5) est commandé à partir du front montant du signal de l'autre capteur précité.

6. Véhicule selon la revendication 4 ou 5, caractérisé en ce que, dans le cas où le calculateur de la logique de commande ne possède pas d'entrée "accessoires" (+ACC) de la clef de contact (5), ce calculateur surveille le capteur de l'état de la position du levier (1) pendant une durée limitée prédéterminée et si le retour du levier (1) en position P intervient après la fin de cette durée prédéterminée, un bref retour de la clef en position "après contact" (+APC) permet de commander le deuxième actionneur (10) de déverrouillage de la clef (5).

7. Véhicule selon l'une des revendications précédentes, caractérisé en ce que la logique de commande est également agencée pour ne pas commander instantanément le premier actionneur (2) de déverrouillage du levier (1) si ce dernier passe en position P alors que la clef de contact (5) est en position "après contact" (+APC) ou "accessoires" (+ACC) et qu'un appui est exercé sur la pédale de frein (4).

8. Véhicule selon la revendication 7, caractérisé en ce que le premier actionneur électromagnétique (2) de déverrouillage du levier (1) de la position P est commandé lorsque le levier (1) est en position P, la clef de contact (5) est en position "après contact" (+APC) ou "accessoires" (+ACC) et le véhicule se déplace à une vitesse supérieure à une valeur minimale, par exemple d'environ 3 km/h.

9. Véhicule selon la revendication 1, caractérisé en ce que le deuxième actionneur (10) de déverrouillage de la clef de contact (5) est commandé lorsque l'un des capteurs précités fournit un signal indiquant que le levier (1) est en position P et l'autre capteur fournit un signal indiquant un déplacement de la clef de contact (5) de sa position "après contact" (+APC) à sa position de coupure du contact.

10. Véhicule selon la revendication 9, caractérisé en ce que le deuxième actionneur (10) de déverrouillage de la clef de contact (5) est commandé à partir du front descendant du signal de l'autre capteur précité.

11. Véhicule selon l'une des revendications précédentes, caractérisé en ce que le premier actionneur (2) de déverrouillage du levier (1) de la position P n'est commandé qu'après écoulement d'une temporisation déterminée, par exemple de 5 secondes, si la pédale de frein (4) est maintenue appuyée.

12. Véhicule selon la revendication 11, caractérisé en ce que la logique de commande est également adaptée pour commander le premier actionneur (2) précité avant la fin de la temporisation en lâchant la pédale de frein (4) et en appuyant à nouveau sur celle-ci.

13. Véhicule selon l'une des revendications précédentes, caractérisé en ce qu'un calculateur électronique est utilisé pour la fonction "shift-lock" pour diagnostiquer une défaillance de l'un des capteurs de position du levier en position P, de détection d'appui sur la pédale de frein (4), de vitesse du véhicule ou de position de la clef de contact (5) et empêcher la commande du premier actionneur (2) de déverrouillage du levier (1) en cas de défaillance d'un capteur diagnostiquée par le calculateur de sorte que le conducteur peut avoir recours à une fonction de secours dite "release" permettant, par un outil ou une clef, de déverrouiller manuellement le levier (1) de la position P.

14. Véhicule selon l'une des revendications précédentes, caractérisé en ce qu'un calculateur électronique est utilisé pour la fonction "key-lock" pour diagnostiquer une défaillance de l'un des capteurs de détection de position du levier (1) en position P ou de position de la clef de contact (5) et si le calculateur détecte une défaillance de l'un des capteurs en l'absence d'une fonction de secours dite "release" permettant, par un outil ou une clef, de déverrouiller manuellement la clef de contact, le deuxième actionneur (10) de déverrouillage de la clef de contact (5) est commandé en ne tenant compte que du seul capteur en état de fonctionnement.

15. Véhicule selon l'une des revendications précédentes, caractérisé en ce qu'il comprend un moyen de signalisation émettant un signal sonore lorsque la porte du conducteur est ouverte alors que le levier (1) n'est pas en position P.

16. Véhicule selon l'une des revendications précédentes, caractérisé en ce que la boîte de vitesses est équipée d'une commande électronique.

## Patentansprüche

1. Kraftfahrzeug mit automatischem Getriebe, versehen mit einer Steuerlogik für die Funktion Schaltsperre des Schaltknüppels (1) in der Position Parken P oder Funktion "shift-lock" durch einen ersten elektromagnetischen Schalter (2), der während einer vorbestimmten Dauer betätigt wird, zum Beispiel eine Minute, um den Schaltknüppel (1) aus der Position P zu entriegeln, wenn auf das Bremspedal (4) des Fahrzeugs ein Druck ausgeübt wird und der Zündschlüssel (5) sich in der Position "nach der Zündung" (+ APC) oder "Zubehör" (+ ACC) befindet, wobei der erste Schalter (2) beim Loslassen und beim erneuten Heruntertreten des Bremspedals (4) erneut betätigt wird, und nach Ablauf der Dauer der Betätigung des ersten Schalters (2) im Anschluß an ein kurzes Loslassen des Bremspedals (4) der erste Schalter (2) sofort betätigt wird, dadurch gekennzeichnet, daß die Steuerlogik ebenfalls eine Funktion Abziehsperre des Zündschlüssels (5) oder Funktion "key-lock" besitzt, wenn der Schaltknüppel (1) nicht in der Position P ist, durch einen zweiten elektromagnetischen Schalter (10), der zur Entriegelung des Zündschlüssels (5) betätigt wird, und daß die Steuerlogik außerdem so angeordnet ist, daß sie den zweiten Schalter (10) zur Entriegelung des Zündschlüssels (5) von Sensoren aus steuert, die auf die Position des Schaltknüppels (1) und des Zündschlüssels (5) oder auf die Bewegung eines von beiden reagieren, wobei der andere sich in einer bestimmten Position befindet und wenigstens wenn einer der Sensoren anzeigt, daß der Schaltknüppel (1) sich in der Position P befindet oder in die Position P gebracht wird.

2. Kraftfahrzeug gemäß Anspruch 1, dadurch gekennzeichnet, daß der zweite Schalter (10) zur Entriegelung des Zündschlüssels (5) betätigt wird, wenn einer der besagten Sensoren ein Signal ausgibt, das anzeigt, daß der Schaltknüppel in die Position P gebracht wurde, bevor oder nachdem der andere Sensor ein Signal zum Abbruch des Kontaktes ausgibt.

3. Kraftfahrzeug gemäß Anspruch 1 oder 2, dadurch gekennzeichnet, daß der zweite Schalter (10) zur Entriegelung des Zündschlüssels (5) während einer vorbestimmten Dauer, zum Beispiel einer Minute, betätigt wird, und nach Ablauf dieser Dauer im Anschluß an eine kurze Rückkehr des Schlüssels in die Position "nach der Zündung" (+ APC), der zweite Schalter (10) unverzüglich betätigt wird.

4. Kraftfahrzeug gemäß Anspruch 1, dadurch gekennzeichnet, daß der zweite Schalter (10) zur Entriegelung des Zündschlüssels (5) betätigt wird, wenn einer der besagten Sensoren ein Signal ausgibt, das eine Verstellung des Zündschlüssels (5) von seiner Position "nach der Zündung" (+ APC) in seine Position Abbruch des Kontakts anzeigt und der andere Sensor ein Signal ausgibt, das anzeigt, daß der Schaltknüppel (1) in die Position P gebracht wurde.

5. Kraftfahrzeug gemäß Anspruch 4, dadurch gekennzeichnet, daß der zweite Schalter (10) zur Entriegelung des Zündschlüssels (5) von der aufsteigenden Front des Signals des anderen besagten Sensors aus gesteuert wird.

6. Kraftfahrzeug gemäß Anspruch 4 oder 5, dadurch gekennzeichnet, daß, in dem Falle, in dem der Rechner der Steuerlogik keinen Eingang "Zubehör" (+ ACC) des Kontaktschlüssels (5) besitzt, dieser Rechner den Sensor für den Zustand der Position des Schaltknüppels (1) während einer vorbestimmten begrenzten Dauer überwacht und wenn die Rückkehr des Schaltknüppels (1) in die Position P nach Beendigung dieser vorbestimmten Dauer erfolgt, erlaubt eine kurze Rückkehr des Schlüssels in die Position "nach der Zündung" (+ APC) die Betätigung des zweiten Schalters (10) zur Entriegelung des Zündschlüssels (5).

7. Kraftfahrzeug gemäß einem der vorherigen Ansprüche, dadurch gekennzeichnet, daß die Steuerlogik ebenfalls so angeordnet ist, daß der erste Schalter (2) zur Entriegelung des Schaltknüppels (1) nicht unverzüglich betätigt wird, wenn letzterer in die Position P übergeht, während der Zündschlüssel (5) sich in der Position "nach der Zündung" (+ APC) oder "Zubehör" (+ ACC) befindet und wenn ein Druck auf das Bremspedal (4) ausgeübt wird.

8. Kraftfahrzeug gemäß Anspruch 7, dadurch gekennzeichnet, daß der erste elektromagnetische Schalter (2) zur Entriegelung des Schaltknüppels (1) in der Position P betätigt wird, wenn der Schaltknüppel (1) sich in der Position P befindet, der Zündschlüssel (5) in der Position "nach der Zündung" (+ APC) oder "Zubehör" (+ ACC) ist und das Kraftfahrzeug sich in einer höheren Geschwindigkeit als ein Mindestwert, zum Beispiel ungefähr 3 km/h, fortbewegt.

9. Kraftfahrzeug gemäß Anspruch 1, dadurch gekennzeichnet, daß der zweite Schalter (10) zur Entriegelung des Zündschlüssels (5) betätigt wird, wenn einer der besagten Sensoren ein Signal ausgibt, das anzeigt, daß der Schaltknüppel (1) in der Position P ist, und der andere Sensor ein Signal ausgibt, das eine Verstellung des Zündschlüssels (5) aus seiner Position "nach der Zündung" (+ APC) in seine Position Abbruch des Kontaktes anzeigt.

10. Kraftfahrzeug gemäß Anspruch 9, dadurch gekennzeichnet, daß der zweite Schalter (10) zur Entriegelung des Zündschlüssels (5) von der absteigenden Front des Signals des anderen besagten Sensors aus gesteuert wird.

11. Kraftfahrzeug gemäß einem der vorherigen Ansprüche, dadurch gekennzeichnet, daß der erste Schalter (2) zur Entriegelung des Schaltknüppels (1) der Position P erst nach Ablauf einer vorbestimmten Verzögerungszeit, zum Beispiel 5 Sekunden, betätigt wird, wenn das Bremspedal (4) weiterhin heruntergetreten wird.

12. Kraftfahrzeug gemäß Anspruch 11, dadurch gekennzeichnet, daß die Steuerlogik ebenfalls so angepaßt ist, daß sie den ersten besagten Schalter (2) vor Ablauf der Verzögerungszeit bei Loslassen des Bremspedals (4) und bei erneutem Heruntertreten desselben betätigt.

13. Kraftfahrzeug gemäß einem der vorherigen Ansprüche, dadurch gekennzeichnet, daß ein elektronischer Rechner für die Funktion "shift-lock" zur Feststellung eines Versagens einer der Sensoren der Position des Schaltknüppels in der Position P, der Erfassung des auf das Bremspedal (4) ausgeübten Drucks, der Geschwindigkeit des Kraftfahrzeugs oder der Position des Zündschlüssels (5) verwendet wird und zur Verhinderung der Betätigung des ersten Schalters (2) zur Entriegelung des Schaltknüppels (1) bei durch den Rechner festgestelltem Versagen eines Sensors, so daß der Fahrer auf eine "release" genannte Hilfsfunktion zurückgreifen kann, die es mittels eines Werkzeugs oder Schlüssels erlaubt, den Schaltknüppel (1) per Hand aus der Position P zu entriegeln.

14. Kraftfahrzeug gemäß einem der vorherigen Ansprüche, dadurch gekennzeichnet, daß ein elektronischer Rechner für die Funktion "key-lock" zur Feststellung eines Versagens eines der Sensoren zur Feststellung der Position des Schaltknüppels (1) in der Position P oder der Position des Zündschlüssels (5) verwendet wird und wenn der Rechner ein Versagen eines der Sensoren feststellt, wird der zweite Schalter (10) zur Entriegelung des Zündschlüssels (5) bei Fehlen der "release" genannten Hilfsfunktion, die es mittels eines Werkzeugs oder Schlüssels erlaubt, den Zündschlüssel per Hand zu entriegeln, unter alleiniger Berücksichtigung des einzigen funktionstüchtigen Sensors betätigt.

15. Kraftfahrzeug gemäß einem der vorherigen Ansprüche, dadurch gekennzeichnet, daß es ein Signalgebungsmittel umfaßt, das ein Tonsignal ausgibt, wenn die Fahrertür offen ist während der Schaltknüppel (1) nicht in der Position P ist.

16. Kraftfahrzeug gemäß einem der vorherigen Ansprüche, dadurch gekennzeichnet, daß das Getriebe mit einer elektronischen Steuerung ausgestattet ist.

## Claims

1. Automobile vehicle with automatic gear box equipped with a control logic having a locking fonction of the shifting lever (1) in a park P position or "shift-lock" function by means of a first electromagnetic actuator (2) which is controlled during a pre-determined duration, for example one minute, for unlocking the lever (1) from the P position when a pressure is exerted on the brake pedal (4) of the vehicle and the ignition key (5) is in the "after ignition" (+APC) or "accessories" (+ACC) position, the first actuator (2) being again activated when the brake pedal (4) is released and then again pushed, and when the actuation duration of the first actuator (2) has elapsed, following a short release of the brake pedal (4), the first actuator (2) is instantaneously controlled, characterized in that the control logic has also a locking function of the ignition key (5) or "key-lock" function, if the lever (1) is not in the P position, by means of a second electromagnetic actuator (10) which is controlled for unlocking the ignition key (5), and in that the control logic is moreover arranged for controlling the second actuator (10) for unlocking the ignition key (5) from sensors that are sensitive to the position of the lever (1) and ignition key (5) or to the movement of anyone thereof, the other being in a given position and at least when one of the sensors indicates that the lever (1) is positioned in or is brought into the P position.

2. Vehicle according to claim 1, characterized in that the second actuator (10) for unlocking the ignition key (5) is controlled when one of said sensors provides a signal indicating that the lever (1) is brought into the P position before or after the other sensor provides an ignition cutting signal.

3. Vehicle according to claim 1 or 2, characterized in that the second actuator (10) for unlocking the ignition key (5) is controlled during a pre-determined duration, for example one minute, and after this duration has elapsed, following a short return of the key in the "after ignition" (+APC) position, the second actuator (10) is instantaneously controlled.

4. Vehicle according to claim 1, characterized in that the second actuator (10) for unlocking the ignition key (5) is controlled when one of said sensors provides a signal indicating a movement of the ignition key (5) from its "after ignition" (+APC) position to its ignition cutting position and the other sensor provides a signal indicating that the lever (1) is brought into the P position.

5. Vehicle according to claim 4, characterized in that the second actuator (10) for unlocking the ignition key (5) is controlled from the rising edge of the signal of said other sensor.

6. Vehicle according to claim 4 or 5, characterized in that, in the case the calculator of the control logic does not have an "accessories" (+ACC) input of the ignition key (5), this calculator monitors the sensor of a position state of the lever (1) during a pre-determined limited duration and, if the return of the lever (1) in the P position happens after end of this pre-determined duration, a short return of the key in the "after contact" (+APC) position enables to control the second actuator (10) for unlocking the key (5).

7. Vehicle according to one of the preceding claims, characterized in that the control logic is also arranged for not instantaneously controlling the first actuator (2) for unlocking the lever (1) if this lever passes in the P position while the ignition key (5) is in the "after contact" (+APC) or "accessories" (+ACC) position and a pressure is exerted on the brake pedal (4).

8. Vehicle according to claim 7, characterized in that the first electromagnetic actuator (2) for unlocking the lever (1) from the P position is controlled when the lever (1) is in the P position, the ignition key (5) is in the "after contact" (+APC) or "accessories" (+ACC) position and the vehicle is driven at a speed that is greater than a minimum value, for example about 3 km/h.

9. Vehicle according to claim 1, characterized in that the second actuator (10) for unlocking the ignition key (5) is controlled when one of said sensors provides a signal indicating that the lever (1) is in the P position and the other sensor provides a signal indicating a movement of the ignition key (5) from its "after contact" (+APC) position to its ignition cutting position.

10. Vehicle according to claim 9, characterized in that the second actuator (10) for unlocking the ignition key (5) is controlled from the falling edge of the signal of said other sensor.

11. Vehicle according to one of the preceding claims, characterized in that the first actuator (2) for unlocking the lever (1) from the P position is controlled only after a determined time delay has elapsed, for example 5 seconds, if the brake pedal (4) is maintained as pushed.

12. Vehicle according to claim 11, characterized in that the control logic is also adapted for controlling said first actuator (10) before end of the time delay by releasing the brake pedal (4) and by pushing again thereupon.

13. Vehicle according to one of the preceding claims, characterized in that an electronic calculator is used for the "shift-lock" function for showing a failure of one of the sensors of a position of the lever in the P position, of a detection of pressure on the brake pedal (4), of a speed of the vehicle or of a position of the ignition key (5), and for preventing the control of the first actuator (2) for unlocking the lever (1) in case of a failure of a sensor shown by the calculator so that the driver can have recourse to an emergency so-called "release" function enabling, by means of a tool or a key, to manually unlock the lever (1) from the P position.

14. Vehicle according to one of the preceding claims, characterized in that an electronic calculator is used for the "key-lock" function for showing a failure of one of the sensors of detection of a position of the lever (1) in the P position or of a position of the ignition key (5) and, if the calculator detects a failure of one of the sensors in the lack of an emergency so-called "release" function enabling, by means of a tool or a key, to manually unlock the ignition key, the second actuator (10) for unlocking the ignition key (5) is controlled by taking into account only the sensor which is in a working state.

15. Vehicle according to one of the preceding claims, characterized in that it comprises a signalling means transmitting a sound signal when the driver door is open while the lever (1) is not in the P position.

16. Vehicle according to one of the preceding claims, characterized in that the gear box is equipped with an electronic control.
